# EUROPÄISCHE PATENTANMELDUNG

(11) **EP 4 741 262 A1**
(43) Veröffentlichungstag der Anmeldung: **13.05.2026**
(21) Anmeldenummer: 25213020.8
(22) Anmeldetag: 03.11.2025
(51) Int. Cl.: B62D 15/02, B60W 30/06, B62D 5/04

(54) **VERFAHREN UND SYSTEM ZUM NOTHALT EINES KRAFTFAHRZEUGES**

(30) Priorität: 08.11.2024 DE 102024210771
(71) Anmelder: Volkswagen Aktiengesellschaft, 38440 Wolfsburg (DE)
(72) Erfinder: Baars, Maximilian, Dr., 38440 Wolfsburg (DE); Winter, Thomas, 38440 Wolfsburg (DE)

(57) **Zusammenfassung**

Verfahren zum Nothalt eines Kraftfahrzeuges (1), aufweisend
- kontinuierliches Ermitteln (S1) von Objekten (2, 3) in einem Bereich rund um das Kraftfahrzeug (1), und zumindest einem Abstellort (4) auf/an einem von dem Kraftfahrzeug (1) befahrenen Verkehrsweg (5) während einer Fahrt des Kraftfahrzeuges (1),
- kontinuierliches Ermitteln (S2) einer Bewegungstrajektorie (6) für das Kraftfahrzeug (1), auf welcher das Kraftfahrzeug (1) ohne Kollision mit den Objekten (2, 3) zu dem zumindest einen Abstellort (4) bewegt werden kann,
- Feststellen (S3) eines Notfalls oder technischen Defekts an oder in dem Kraftfahrzeug (1),
- automatisches Steuern (S4) der Fahrt des Kraftfahrzeugs (1) auf der Bewegungstrajektorie (6) zu dem zumindest einen Abstellort (4), wo das Kraftfahrzeug (1) automatisch zum Halten gebracht wird
und System zur Durchführung des Verfahrens.

## Beschreibung

Die Erfindung betrifft ein Verfahren und System zum Nothalt eines Kraftfahrzeuges.

Steer-by-Wire (SbW) Lenksysteme, welche zukünftig im Automobilbereich in Großserie eingesetzt werden können, müssen eine deutlich höhere Ausfallsicherheit aufweisen als konventionelle Lenksysteme. Dies liegt daran, dass SbW-Systeme über keine mechanische Verbindung zwischen Lenkrad und Lenkgetriebe verfügen. Ein kompletter Ausfall des Lenksystems würde dazu führen, dass das Fahrzeug nicht mehr lenkbar wäre. Somit muss ein kompletter Ausfall verhindert und Fehlerwirkungen frühzeitig erkannt werden. Zweitens erfordern auch autonome fahrende Assistenzsysteme eine erhöhte Sicherheit an die Fahrzeugkomponenten. Ein SbW-System besteht aus einem Force-Feedback Aktuator (FFA), welcher den gewünschten Lenkwinkel erfasst und ein realistisches Feedbackmoment an den Fahrer vermittelt. Außerdem besteht das SbW-System aus dem Lenkgetriebe (Road-Wheel Actuator (RWA)), welches den vom FFA empfangenen Fahrerwunsch in eine Radlenkbewegung umsetzt.

Im Falle eines Doppelfehlers im Lenksystem, der die Erfassung und oder Übertragung des Fahrerwunsches vom FFA an den RWA betrifft oder eines kritischen Fehlers im Fahrsystem welcher die Erfassung und Umsetzung des Fahrerwunsches beziehungsweise die Verfügbarkeit weiterer Fahrfunktionen einschränkt, befindet sich das Fahrzeug im degradierten Zustand und es ist keine Umsetzung der Lenkwinkelvorgabe und somit das Einregeln einer Zahnstangenposition im manuellen Betrieb zur Generierung eines Radlenkwinkels mehr möglich. "Degradierter Zustand" bedeutet, dass ein Defekt in der Lenkung vorliegt und derart ist, dass eine manuelle Steuerung nicht mehr möglich ist.

Um die Fahrerwunsch Erfassung möglichst sicher zu gestalten wird der FFA mit ASIL-D für Sicherheitsziele, die die Erfassung des Lenkwinkels betreffen, ausgelegt. Die Erfassung des Fahrerwunsches ist somit redundant sichergestellt. Falls ein Fehler, Doppelfehler, oder Common-Cause Fehler zu dem Ausfall der Lenkwinkelerfassung führt, ist das Einstellen eines sicheren Zustands (das Fahren an den Seitenrand) nicht mehr durch den Fahrer möglich. Steer-by-Brake (SbB) Systeme ermöglichen die radselektive Ansteuerung der Bremskomponenten und ermöglichen somit eine Querführung. Jedoch ist die maximal erreichbare Querbeschleunigung auf 2 m/s² begrenzt und der sichere Zustand kann nicht erreicht erreichen, da der Fahrerwunsch nicht mehr erfasst werden kann. Aktuell gängige Fehlerbehandlungen im RWA sind ein elektrischer Kurzschluss der Phasen im RWA Elektromotor, um den aktuellen Lenkwinkel zu halten oder ein stromlos Schalten des RWA Elektromotors, um einem Weg, vorgegeben durch die Achsgeometrie, typischerweise Geradeauslauf, zu folgen.

Ein SbB System ohne Fahrerwunscherfassung ist nicht in der Lage, den sicheren Zustand zu erreichen, da die Performanceanforderungen an die Querführung nicht ausreichen und eine Umfeldbeobachtung ohne Fahrerwunscherfassung nicht möglich ist. Das Kurzschließen der Phasen im RWA Elektromotor oder das stromlos Schalten des RWA Elektromotor führen ebenfalls nicht zum sicheren Zustand, da das Fahrzeug nicht mehr kontrollierbar ist. Das Fahrzeug kann durch zusätzliche Systeme, wie bspw. das Bremssystem zwar in den Stillstand gebracht werden, jedoch ohne ausreichende Querführung nicht in den sicheren Zustand, zum Beispiel an den Straßenrand. Beide Varianten führen dadurch nicht zum Erreichen eines sicheren Zustands.

DE 10 2022 204 291 A1 betrifft ein Verfahren zum Betreiben eines Steer-by-Wire-Lenksystems, wobei das Steer-by-Wire-Lenksystem einen Lenkradaktuator und einen Lenkaktuator aufweist, die signaltechnisch miteinander gekoppelt sind, wobei der Lenkaktuator zum Einstellen einer aus zumindest einem an einem Lenkrad erfassten Lenkradwinkel abgeleiteten Soll-Lenkgröße an mindestens einem lenkbaren Rad unter Verwendung von ersten Regelparametern geregelt wird, wobei der Lenkradaktuator zum Einstellen eines aus zumindest einer erfassten Ist-Lenkgröße des mindestens einen lenkbaren Rades abgeleiteten Rückkopplungsmoments an dem Lenkrad unter Verwendung von zweiten Regelparametern geregelt wird, wobei in mindestens einer ausgewählten Fahrsituation bei der Regelung des Lenkradaktuators geänderte zweite Regelparameter verwendet werden oder rückkopplungslos geregelt wird. Eine Lösung des vorangehend beschriebenen Problems wird damit aber nicht bereitgestellt.

Aufgabe der Erfindung war es, für das vorangehend beschriebenen Problem eine Lösung anzugeben.

Gelöst wird die Aufgabe durch ein Verfahren und ein System nach den unabhängigen Ansprüchen. Spezielle Ausführungsformen sind in Unteransprüchen und dieser Beschreibung angegeben.

Angeben wird ein Verfahren zum Nothalt eines Kraftfahrzeuges, aufweisend
- kontinuierliches Ermitteln von Objekten in einem Bereich rund um das Kraftfahrzeug, und zumindest einem Abstellort auf/an einem von dem Kraftfahrzeug befahrenen Verkehrsweg während einer Fahrt des Kraftfahrzeuges,
- kontinuierliches Ermitteln einer Bewegungstrajektorie für das Kraftfahrzeug, auf welcher das Kraftfahrzeug ohne Kollision mit den Objekten zu dem zumindest einen Abstellort bewegt werden kann,
- Feststellen eines Notfalls oder technischen Defekts an oder in dem Kraftfahrzeug,
- automatisches Steuern der Fahrt des Kraftfahrzeugs auf der Bewegungstrajektorie zu dem zumindest einen Abstellort, wo das Kraftfahrzeug automatisch zum Halten gebracht wird.

Von der Erfindung werden im Allgemeinen oder in speziellen Ausführungsformen einer oder mehrere der folgenden Vorteile erzielt:
- Automatisierte, vorzugsweise assistenzsystembasierte, Querführung des Kraftfahrzeugs im degradierten Fahrzeugzustand.
- Erreichen des sicheren Zustands im Fehlerfall durch situativ berechnete Bewegungstrajektorie unter Berücksichtigung der aktuellen Verkehrssituation und Umgebung.
- Ein sicherer Zustand kann ohne Lenkwinkeleingaben des Fahrers erreicht werden.
- Querführung des Kraftfahrzeugs ohne Fahrerwunscherfassung ist möglich.
- Im degradierten Fahrzeugzustand: Erreichung des sicheren Zustands ohne Lenkwinkeleingabe durch eine vorberechnete situativ passende Bewegungstrajektorie,
- Verringerung der Gefahren für andere Verkehrsteilnehmer durch eine Querführmöglichkeit des Kraftfahrzeugs im Fehlerfall. An dem Abstellort wird ein sicherer Zustand erreicht.

Das Ermitteln einer Bewegungstrajektorie erfolgt vorzugsweise durch eine Berechnung.

Das Ermitteln einer Bewegungstrajektorie erfolgt permanent bzw. fortlaufend. Vordefinierte zeitlich Abstände der Ermittlung können vorgesehen sein.

Das Ermitteln einer Bewegungstrajektorie kann in einer Ausführungsform im Kraftfahrzeug oder auf Backend Servern mit Übertragung zum Kraftfahrzeug vorgenommen werden.

Objekte können relativ zu dem Verkehrsweg mobile Objekte sein.

Objekte können relativ zu dem Verkehrsweg stationäre Objekte sein.

Objekte können andere Verkehrsteilnehmer, wie Fußgänger oder Fahrzeuge, sein.

Objekte können Begrenzungen des Verkehrswegs oder Bauwerke sein.

Der Abstellort in kann beispielsweise auf einer Fahrspur oder am Straßenrand sein.

In einer Ausführungsform erfolgt auch ein kontinuierliches Ermitteln freier Fahrspuren. Diese können dazu dienen die Bewegungstrajektorie zu ermitteln, welche dann über eine oder mehrere der freien Fahrspuren führen kann.

Ein Notfall ist an sich nicht beschränkt, und kann beispielsweise sein: Eine Handlungsunfähigkeit des Fahrzeugführers, ein Brand des Kraftfahrzeugs oder ein Unfall, nach dem das Kraftfahrzeug weiterhin steuerbar bleibt.

Ein technischer Defekt an oder in dem Kraftfahrzeug ist beispielsweise ein Defekt, durch den das Kraftfahrzeug nicht mehr manuell steuerbar ist, da die Lenkwinkelerfassung nicht mehr ausreichend verfügbar ist. Wenn der Defekt in der Lenkung vorliegt und derart ist, dass eine manuelle Steuerung nicht mehr möglich ist, wird dies nachfolgend auch als "degradierter Zustand" bezeichnet.

Ein automatisches Steuern der Fahrt des Kraftfahrzeugs ist ein Steuern nicht durch den Fahrzeugführer. Ein automatisches Steuern der Fahrt des Kraftfahrzeugs erfolgt durch eine autonom arbeitende Steuerungseinrichtung. Eine Möglichkeit der Deaktivierung der Steuereinrichtung kann vorgesehen sein.

In einer Ausführungsform erfolgt das Ermitteln der Bewegungstrajektorie mittels im Kraftfahrzeug vorhandener Assistenzsysteme, Navigationsdaten, GPS Daten, CAR2X oder Server Backend Informationen über die aktuelle Verkehrssituation, oder einer Kombination davon.

In Kraftfahrzeug vorhandene Assistenzsysteme sind vorzugsweise und ohne Beschränkung eine oder mehrere der folgenden: Kamera, Abstandssensoren, Radar, oder Lidar.

Die im Kraftfahrzeug vorhandenen Assistenzsysteme, sowie alle weiteren zur Verfügung stehenden Datenquellen, wie bspw. Navigationsdaten, GPS Daten, CAR2X oder Server Backend Informationen über die aktuelle Verkehrssituation können in dieser Ausführungsform genutzt werden, um die Bewegungstrajektorie zu ermitteln, vorzugsweise zu berechnen. Sind die Assistenzsysteme durch einen Fehler im Fahrzeug nicht verfügbar, kann eine zuletzt ermittelte Bewegungstrajektorie verwendet werden.

In einer Ausführungsform weist das Kraftfahrzeug eine Steer-by-Wire Lenkung mit einer Zahnstange und einem Zahnstangenaktuator auf und aus der Bewegungstrajektorie wird ein Zahnstangen-Bewegungsprofil ermittelt und mit dem Zahnstangenaktuator wird die Zahnstange gemäß dem Zahnstangen-Bewegungsprofil bewegt. Die Bewegung der Zahnstange gemäß dem Zahnstangen-Bewegungsprofil führt, gemeinsam mit dem aufgebrachten Vortrieb des Fahrzeugs, zu der Bewegung entlang der Bewegungstrajektorie.

Unter einer Steer-by-Wire Lenkung versteht man ein Lenksystem, bei dem ein Lenkbefehl von einer Lenkhandhabe, beispielsweise einem Lenkrad ausschließlich elektrisch zum Zahnstangenaktuator, der den Lenkbefehl ausführt, weitergeleitet wird. Es besteht bei einem solchen Lenksystem keine mechanische Verbindung zwischen Lenkrad und gelenkten Rädern.

Die Zahnstange ist mit Rädern gekoppelt, sodass eine Bewegung der Zahnstange gemäß dem Zahnstangen-Bewegungsprofil zu Lenkbewegungen der Räder führt. Die Lenkbewegungen der Räder sind derart, dass eine Bewegung des Fahrzeugs entlang der Bewegungstrajektorie erfolgt.

Die Bewegungstrajektorie wird in dieser Ausführungsform in ein, vorzugsweise speziell für das jeweilige Kraftfahrzeug angepasstes, Zahnstangen-Bewegungsprofil umgerechnet. Das Zahnstangen-Bewegungsprofil, insbesondere Steuerbefehle zum Erhalt des Zahnstangen-Bewegungsprofils, kann an einen Zahnstangenaktuator übertragen werden und dann vom Zahnstangenaktuator umgesetzt werden und die Zahnstange mit Hilfe des Zahnstangenaktuators entsprechend des vorgegebenen Zahnstangen-Bewegungsprofils bewegt werden.

Der Zahnstangenaktuator ist vorzugsweise ein Road-Wheel Actuator (RWA). Der Zahnstangenaktuator weist vorzugsweise einen Elektromotor und einen Antrieb für die Zahnstange auf, beispielsweise ein an den Elektromotor gekoppeltes Antriebsmittel, beispielsweise ein Ritzel, das in die Zahnstange eingreift.

Durch das Bewegen der Zahnstange gemäß dem Zahnstangen-Bewegungsprofil durch den Zahnstangenaktuator wird ein sicherer Zustand erreicht, durch ein automatisches Steuern der Fahrt des Kraftfahrzeugs gemäß dem Zahnstangen-Bewegungsprofil auf der Bewegungstrajektorie zu dem zumindest einen Abstellort, wo das Kraftfahrzeug automatisch zum Halten gebracht wird.

Die Ausführungsform sieht vorzugsweise eine fortlaufende Berechnung des Zahnstangenprofils vor, um im Fehlerfall einen sicheren Zustand durch das Abfahren des Zahnstangenprofils zu erreichen.

Durch das Bewegen der Zahnstange gemäß dem Zahnstangen-Bewegungsprofil kann eine Querführung erzeugt werden, welche ohne zusätzliche Fahrer Eingaben, wie zum Beispiel durch aufgebrachte Lenkwinkel einen sicheren Zustand des Kraftfahrzeugs herstellt. Das Zahnstangen-Bewegungsprofil beinhaltet alle durch Assistenzsysteme ermittelten Objekte, und kann situativ bei einer Änderung der Umgebung adaptiert werden. Eine Erhöhung der Sicherheit erreicht man durch das Abfahren des Zahnstangenbewegungsprofils. Es kann durch den Zahnstangenaktuator auch im degradierten Fahrzeugzustand eine Querführung erzeugt werden welche ohne zusätzliche Fahrereingaben, wie z.B. durch aufgebrachte Lenkwinkel, einen sicheren Zustand des Kraftfahrzeugs herstellt.

Die vorherige Ermittlung der Trajektorie sorgt dafür, dass das Zahnstangenprofil auch nach einem Fehler im Kraftfahrzeug, welcher eine Degradation der Lenkung zur Folge hat, die Querführung in den sicheren Zustand gewährleisten kann. Durch erwähnte Assistenzsysteme und/oder die anderen erwähnten Datenquellen kann die Bewegungstrajektorie an den aktuellen Umgebungszustand und Verkehr angepasst werden.

In einer Ausführungsform wird durch den Zahnstangenaktuator eine Querbeschleunigung des Kraftfahrzeugs von mehr als 2 m/s² erzeugt. Werte von bis zu oder mindestens 4 m/ s² sind möglich.

Die Umsetzung einer Querführung ist auch im degradierten Zustand noch möglich, sofern der redundant mit Energie versorgte Zahnstangenaktuator noch über eine Spannungsquelle verfügt und somit mind. 50% Leistung abrufen kann.

In einer Ausführungsform enthält das Zahnstangen-Bewegungsprofil eines oder mehr der Folgenden: eine Position der Zahnstange, eine Bewegungsgeschwindigkeit der Zahnstange, eine Beschleunigung einer Bewegung der Zahnstange, eine Bewegungsrichtung der Zahnstange, oder eine Abfolge von mehreren davon.

Diese Informationen können genutzt werden um den Zahnstangenaktuator anzusteuern.

In einer Ausführungsform ist der technische Defekt ein Defekt in der Steer-by-Wire Lenkung oder im Fahrzeug, durch den das Kraftfahrzeug nicht mehr manuell steuerbar ist. Vorteile, die sich dann erfindungsgemäß durch die Herstellung eines sicheren Zustand ergeben, wurden oben genannt.

In einer Ausführungsform wird nach dem Halten des Kraftfahrzeugs der Zahnstangenaktuator derart deaktiviert, dass die Zahnstange durch eine externe Krafteinwirkung auf die Räder bewegt werden kann.

Hierdurch ist eine Veränderung der Zahnstangeposition beim Abschleppvorgang weiterhin möglich. Nach Erreichen des sicheren Zustands an dem Abstellort kann das Kraftfahrzeug durch den Freilauf der Achse einfacher abgeschleppt werden. Vorzugsweise wird nach dem Erreichen des sicheren Zustands an dem Abstellort ein erwähnter Zahnstangenaktuator stromlos geschaltet.

In einer Ausführungsform wird ein Geschwindigkeitsprofil und/oder Beschleunigungsprofil ermittelt, mit dem das automatische Steuern der Fahrt des Kraftfahrzeugs auf der Bewegungstrajektorie zu dem zumindest einen Abstellort erfolgt.

In einer Ausführungsform ist der Abstellort auf einem Standstreifen. Hierbei handelt es sich um den Abstellort mit größtmöglicher Sicherheit. Auf dem Standstreifen kann das Kraftfahrzeug dann wieder in Geradeaus-Fahrtrichtung gebracht werden.

In einem Aspekt betrifft die Erfindung ein System zur Durchführung eines vorangehend beschriebenen Verfahrens zum Nothalt eines Kraftfahrzeuges, aufweisend
- eine Beobachtungs-Einrichtung zum kontinuierlichen Ermitteln von Objekten rund um das Kraftfahrzeug, und zumindest einem Abstellort auf/an einem von dem Kraftfahrzeug befahrenen Verkehrsweg während einer Fahrt des Kraftfahrzeuges,
- eine Bewegungstrajektorien-Ermittlungs-Einrichtung zum kontinuierlichen Ermitteln einer Bewegungstrajektorie für das Kraftfahrzeug, auf welcher das Kraftfahrzeug ohne Kollision mit den Objekten zu dem zumindest einen Abstellort bewegt werden kann,
- eine Steuerungseinrichtung, die beim Feststellen eines Notfalls oder technischen Defekts an oder in dem Kraftfahrzeug aktivierbar ist und eingerichtet ist zum automatischen Steuern der Fahrt des Kraftfahrzeugs auf der Bewegungstrajektorie zu dem zumindest einen Abstellort, wo das Kraftfahrzeug von der Steuerungseinrichtung automatisch zum Halten gebracht wird.

Das System kann zur Durchführung eines jeglichen vorangehend beschriebenen Verfahrens eingerichtet sein.

Die Beobachtungs-Einrichtung ist beispielsweise ein vorangehend erwähntes Assistenzsystem, wie beispielsweise zumindest eine Kamera, zumindest ein Abstandssensor, ein Radar, ein Lidar.

Die Bewegungstrajektorien-Ermittlungs-Einrichtung und die Steuerungseinrichtung können beispielsweise ein Teil eines Fahrzeugcomputers sein, oder ein Teil eines Fahrzeugcomputers, die zu dem genannten Zweck programmiert ist.

Nachfolgend wir die Erfindung anhand von Ausführungsbeispielen beschrieben. Es zeigen:
- Fig. 1: die Ermittlung einer Bewegungstrajektorie für ein Kraftfahrzeug
- Fig. 2: eine Steer by Wire Lenkung, welche in dem erfindungsgemäßen Verfahren verwendet werden kann
- Fig. 3: ein erfindungsgemäßes System und Verfahrensablauf

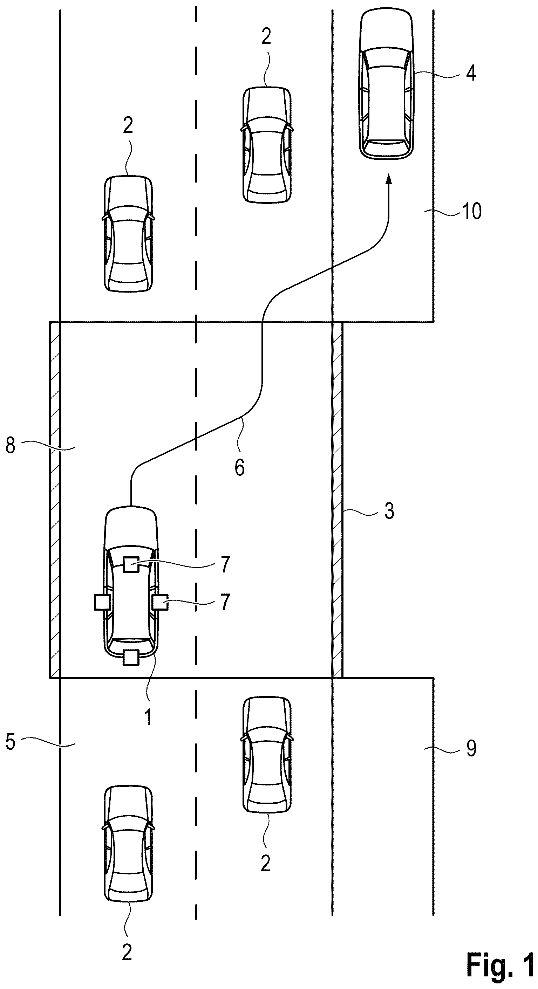

Das in Fig. 1 gezeigte Kraftfahrzeug 1 befindet sich auf dem Verkehrsweg 5, einer hier zweispurigen Straße. Rund um das Fahrzeug herum befinden sich die Objekte 2, die in diesem Fall andere Kraftfahrzeuge sind. Ferner ist als zum Verkehrsweg 5 stationäres Objekt 3 der Tunnel 8 mit der Tunnelwand 3. Die Objekte 2, 3 werden mit den Assistenzsystemen 7, hier im Beispiel Kameras an dem Kraftfahrzeug 1, erfasst. Vor dem Tunnel 8 befindet sich in Fahrtrichtung der Standstreifen 9 und hinter dem Tunnel 8 befindet sich in Fahrtrichtung der Standstreifen 10.

Es erfolgt auf Basis der mit den Assistenzsystemen 7 ermittelten Informationen über die Position der Objekte 2, 3 kontinuierlich die Ermittlung einer Bewegungstrajektorie 6 für das Kraftfahrzeug 1, auf welcher das Kraftfahrzeug 1 ohne Kollision mit den Objekten 2, 3 zu dem zumindest einen Abstellort 4 bewegt werden kann. Wird in der in Fig. 1 gezeigten Situation ein Notfall oder technischer Defekt festgestellt, wird die in Fig. 1 gezeigte Bewegungstrajektorie 6 verwendet, um das Kraftfahrzeug 1 zu dem Abstellort 4 auf den Standstreifen 10 bewegt und dort zum Halt gebracht.

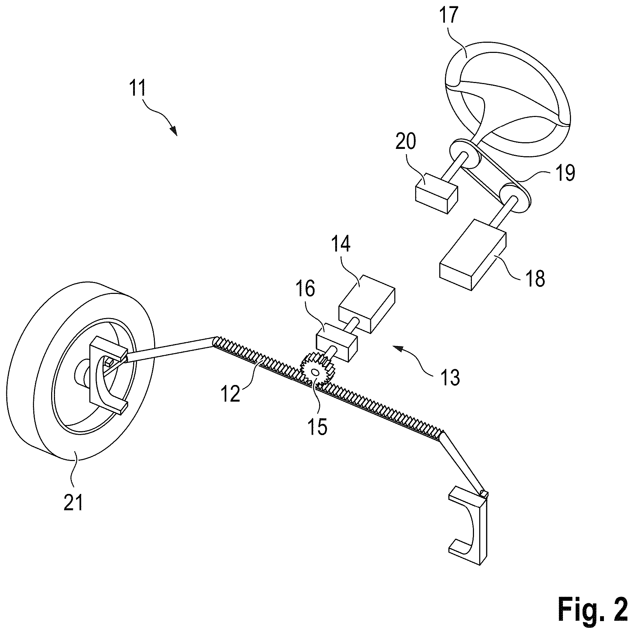

Der technische Defekt kann ein Defekt in einer in Fig. 2 gezeigten Steer-by-Wire Lenkung 11 sein. Eine Lenkbewegung des Lenkrad 17 wird von dem Winkelsensor 16 erfasst, der den Lenkwinkel erfasst. Der Elektromotor 18 unterstützt über das Getriebe 19 die Lenkbewegung. Die Winkelinformation des Winkelsensors 16 wird an den Winkelsensor 20 übertragen. Auf Basis der Winkelinformation wird der Zahnstangenaktuator 13 aktiviert und die Zahnstange 12 wird von dem Zahnstangenaktuator 13 bewegt. Der Zahnstangenaktuator 13 weist den Elektromotor 14 und das von dem Elektromotor 14 angetriebene Ritzel 15 auf. Das angetriebene Ritzel 15 treibt die Zahnstange 12 an, deren Translationsbewegung über die nicht weiter beschriebene und an sich bekannte mechanische Kopplung eine Auslenkbewegung des Rades 21 bewirkt.

Ein technischer Defekt an der Steer-by-Wire Lenkung 11 kann beispielsweise bei der Informationsübertragung von dem Winkelsensor 20 an den Winkelsensor 16 auftreten, sodass ein Lenkwunsch des Fahrers nicht übertragen wird und eine manuelle Lenkung durch den Fahrer nicht mehr möglich ist.

Es wird aus der Bewegungstrajektorie 6, gezeigt in Fig. 1, ein Zahnstangen-Bewegungsprofil ermittelt (was kontinuierlich erfolgt) und mit dem Zahnstangenaktuator 13 wird die Zahnstange 12 gemäß dem Zahnstangen-Bewegungsprofil bewegt. Das Rad 21 und das weitere an die Zahnstange 12 gekoppelte Rad werden entsprechend gelenkt und das Kraftfahrzeug 1 wird entlang der Bewegungstrajektorie 6 bewegt.

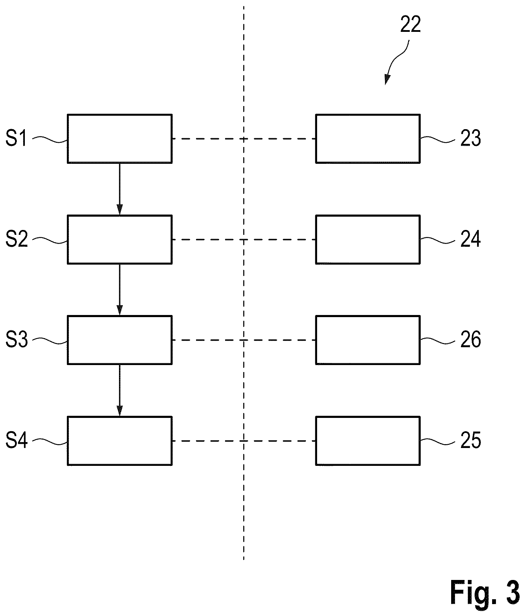

Fig. 3 zeigt ein erfindungsgemäßes System 22 und einen Verfahrensablauf des erfindungsgemäßen Verfahrens.

Das System weist auf: die Beobachtungs-Einrichtung 23, welche im speziellen die in Fig. 1 gezeigten Kameras aufweisen kann, die Bewegungstrajektorien-Ermittlungs-Einrichtung 24, die Steuerungseinrichtung 25 und die Notfall-Ermittlungseinrichtung 26.

Mir der Beobachtungs-Einrichtung 23 erfolgt das kontinuierliche Ermitteln S1 der Objekte 2, 3 in einem Bereich rund um das Kraftfahrzeug 1, und zumindest einen Abstellort 4 auf/an dem von dem Kraftfahrzeug 1 befahrenen Verkehrsweg 5 während der Fahrt des Kraftfahrzeuges 1

Mit der Bewegungstrajektorien-Ermittlungs-Einrichtung 24 erfolgt das kontinuierliche Ermitteln S2 der Bewegungstrajektorie 6 für das Kraftfahrzeug 1, auf welcher das Kraftfahrzeug 1 ohne Kollision mit den Objekten 2, 3 zu dem zumindest einen Abstellort 4 bewegt werden kann

Mit der der Notfall-Ermittlungseinrichtung 26 erfolgt das Feststellen S3 eines Notfalls oder technischen Defekts an oder in dem Kraftfahrzeug 1

Mit der Steuerungseinrichtung 25 erfolgt das automatische Steuern der Fahrt des Kraftfahrzeugs 1 auf der Bewegungstrajektorie 6 zu dem zumindest einen Abstellort 4, wo das Kraftfahrzeug 1 automatisch zum Halten gebracht wird.

### Bezugszeichenliste

- 1: Kraftfahrzeug
- 2: Objekt, anderes Kraftfahrzeug
- 3: Objekt, Tunnelwand
- 4: Abstellort
- 5: Verkehrsweg
- 6: Bewegungstrajektorie
- 7: Assistenzsystem
- 8: Tunnel
- 9: Standstreifen
- 10: Standstreifen
- 11: Steer-by-Wire Lenkung
- 12: Zahnstange
- 13: Zahnstangenaktuator
- 14: Elektromotor
- 15: Ritzel
- 16: Winkelsensor
- 17: Lenkrad
- 18: Elektromotor
- 19: Getriebe
- 20: Winkelsensor
- 21: Rad
- 22: System
- 23: Beobachtungs-Einrichtung
- 24: Bewegungstrajektorien-Ermittlungs-Einrichtung
- 25: Steuerungseinrichtung
- 26: Notfall-Ermittlungseinrichtung

- S1: kontinuierliches Ermitteln der Objekte 2, 3
- S2: kontinuierliches Ermitteln der Bewegungstrajektorie 6
- S3: Feststellen eines Notfalls oder technischen Defekts
- S4: automatisches Steuern der Fahrt des Kraftfahrzeugs 1

## Patentansprüche

1. Verfahren zum Nothalt eines Kraftfahrzeuges (1), aufweisend
- kontinuierliches Ermitteln (S1) von Objekten (2, 3) in einem Bereich rund um das Kraftfahrzeug (1), und zumindest einem Abstellort (4) auf/an einem von dem Kraftfahrzeug (1) befahrenen Verkehrsweg (5) während einer Fahrt des Kraftfahrzeuges (1),
- kontinuierliches Ermitteln (S2) einer Bewegungstrajektorie (6) für das Kraftfahrzeug (1), auf welcher das Kraftfahrzeug (1) ohne Kollision mit den Objekten (2, 3) zu dem zumindest einen Abstellort (4) bewegt werden kann,
- Feststellen (S3) eines Notfalls oder technischen Defekts an oder in dem Kraftfahrzeug (1),
- automatisches Steuern (S4) der Fahrt des Kraftfahrzeugs (1) auf der Bewegungstrajektorie (6) zu dem zumindest einen Abstellort (4), wo das Kraftfahrzeug (1) automatisch zum Halten gebracht wird.

2. Verfahren nach Anspruch 1, wobei das Ermitteln der Bewegungstrajektorie (6) mittels im Kraftfahrzeug (1) vorhandener Assistenzsysteme (7), Navigationsdaten, GPS-Daten, CAR2X oder Server Backend Informationen über die aktuelle Verkehrssituation, oder einer Kombination davon, erfolgt.

3. Verfahren nach Anspruch 1 oder 2, wobei das Kraftfahrzeug (1) eine Steer-by-Wire Lenkung (11) mit einer Zahnstange (12) und einem Zahnstangenaktuator (13) aufweist und aus der Bewegungstrajektorie (6) ein Zahnstangen-Bewegungsprofil ermittelt wird und mit dem Zahnstangenaktuator (13) die Zahnstange (12) gemäß dem Zahnstangen-Bewegungsprofil bewegt wird.

4. Verfahren nach Anspruch 3, wobei durch den Zahnstangenaktuator (13) eine Querbeschleunigung des Kraftfahrzeugs (1) von mehr als 2 m/s² erzeugt wird.

5. Verfahren nach Anspruch 3 oder 4, wobei das Zahnstangen-Bewegungsprofil eines oder mehr der Folgenden enthält: eine Position der Zahnstange (12), eine Bewegungsgeschwindigkeit der Zahnstange (12), eine Beschleunigung einer Bewegung der Zahnstange (12), eine Bewegungsrichtung der Zahnstange (12), oder eine Abfolge von mehreren davon.

6. Verfahren nach einem der Ansprüche 3-5, wobei der technische Defekt ein Defekt in der Steer-by-Wire Lenkung (11) ist, durch den das Kraftfahrzeug (1) nicht mehr manuell steuerbar ist.

7. Verfahren nach einem der Ansprüche 3-6, wobei nach dem Halten des Kraftfahrzeugs (1) der Zahnstangenaktuator (13) derart deaktiviert wird, dass die Zahnstange (12) durch eine externe Krafteinwirkung auf Räder (21) bewegt werden kann.

8. Verfahren nach einem der vorangehenden Ansprüche, bei dem ein Geschwindigkeitsprofil und/oder Beschleunigungsprofil ermittelt wird, mit dem das automatische Steuern der Fahrt des Kraftfahrzeugs (1) auf der Bewegungstrajektorie (6) zu dem Abstellort (4) erfolgt.

9. Verfahren nach einem der vorangehenden Ansprüche, wobei der Abstellort (4) auf einem Standstreifen (10) ist.

10. System (22) zur Durchführung eines Verfahrens zum Nothalt eines Kraftfahrzeuges (1) nach einem der Ansprüche 1 - 9, aufweisend
- eine Beobachtungs-Einrichtung (23) zum kontinuierlichen Ermitteln (S1) von Objekten rund um das Kraftfahrzeug (1), und zumindest einem Abstellort (4) auf/an einem von dem Kraftfahrzeug (1) befahrenen Verkehrsweg (5) während einer Fahrt des Kraftfahrzeuges (1),
- eine Bewegungstrajektorien-Ermittlungs-Einrichtung (24) zum kontinuierlichen Ermitteln (S2) einer Bewegungstrajektorie (6) für das Kraftfahrzeug (1), auf welcher das Kraftfahrzeug (1) ohne Kollision mit den Objekten (2, 3) zu dem zumindest einen Abstellort (4) bewegt werden kann,
- eine Steuerungseinrichtung (25), die beim Feststellen (S3) eines Notfalls oder technischen Defekts an oder in dem Kraftfahrzeug (1) aktivierbar ist und eingerichtet ist zum automatischen Steuern (S4) der Fahrt des Kraftfahrzeugs (1) auf der Bewegungstrajektorie (6) zu dem zumindest einen Abstellort (4), wo das Kraftfahrzeug (1) von der Steuerungseinrichtung (25) automatisch zum Halten gebracht wird.
